# EUROPEAN PATENT APPLICATION

(11) **EP 4 668 921 A1**
(43) Date of publication of application: **24.12.2025**
(21) Application number: 24757256.3
(22) Date of filing: 15.02.2024
(51) Int. Cl.: H04W 64/00, H04L 5/00, H04W 8/00, G01S 5/00, H04W 24/08, H04W 92/18, H04W 72/25, G01S 5/02

(54) **METHOD FOR DETERMINING ANCHOR UE FOR POSITIONING IN WIRELESS COMMUNICATION SYSTEM, AND DEVICE THEREFOR**

(30) Priority: 15.02.2023 KR 20230020291; 15.02.2023 KR 20230020294; 24.02.2023 KR 20230025243
(71) Applicant: LG Electronics Inc., Yeongdeungpo-gu Seoul 07336 (KR)
(72) Inventor: NAM, Jonggil, Seoul 06772 (KR); KO, Woosuk, Seoul 06772 (KR); SEO, Hanbyul, Seoul 06772 (KR); LEE, Seungmin, Seoul 06772 (KR)
(74) Representative: Mooser, Sebastian Thomas
(86) International application number: PCT/KR2024/095157
(87) International publication number: WO 2024/172536

(57) **Abstract**

The present disclosure relates to a method performed by a user equipment (UE) in a wireless communication system. Specifically, the method comprises the steps of: receiving, from a plurality of candidate UEs, assistance information including a plurality of zone identifiers related to the plurality of candidate UEs; on the basis of the plurality of zone identifiers, determining at least one anchor UE among the plurality of candidate UEs; and performing a positioning procedure with the at least one anchor UE.

## Description

### TECHNICAL FIELD

The present disclosure relates to a wireless communication system. More specifically, it relates to a method for determining an anchor user equipment (UE) for positioning in a wireless communication system, and an apparatus for the same.

### BACKGROUND

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more communication devices require a larger communication capacity, there is a need for improved mobile broadband communication, compared to existing radio access technology (RAT). Accordingly, communication systems that take into account services or UEs sensitive to reliability and latency are under discussion, and the next-generation wireless access technology that takes into account improved mobile broadband communication, massive machine type communication (MTC), and ultra-reliable and low latency communication (URLLC) may be referred to as new RAT or new radio (NR). V2X communication may also be supported in NR.

### DISCLOSURE

### Technical Problem

Based on the discussion above, a method of determining an anchor UE for positioning in a wireless communication system, and an apparatus for the same are proposed.

The objects to be achieved with the present disclosure are not limited to what has been particularly described hereinabove and other objects not described herein will be more clearly understood by persons skilled in the art from the following detailed description.

### Technical Solution

In one aspect of the present disclosure, provided herein is a method performed by a user equipment (UE) in a wireless communication system. The method may include receiving, from a plurality of candidate UEs, assistance information including a plurality of zone identifiers related to the plurality of candidate UEs, determining at least one anchor UE among the plurality of candidate UEs based on the plurality of zone identifiers, and performing a positioning procedure with the at least one anchor UE.

In another aspect of the present disclosure, provided herein is a UE in a wireless communication system. The UE may include at least one transceiver, at least one processor, and at least one computer memory operably connectable to the at least one processor and storing instructions that, when executed, cause the at least one processor to perform operations. The operations may include receiving, from a plurality of candidate UEs, assistance information including a plurality of zone identifiers related to the plurality of candidate UEs, determining at least one anchor UE among the plurality of candidate UEs based on the plurality of zone identifiers, and performing a positioning procedure with the at least one anchor UE.

In another aspect of the present disclosure, provided herein is a processing device in a wireless communication system. The processing device may include at least one processor, and at least one computer memory operably connectable to the at least one processor and storing instructions that, when executed, cause the at least one processor to perform operations for a user equipment (UE). The operations may include receiving, from a plurality of candidate UEs, assistance information including a plurality of zone identifiers related to the plurality of candidate UEs, determining at least one anchor UE among the plurality of candidate UEs based on the plurality of zone identifiers, and performing a positioning procedure with the at least one anchor UE.

In another aspect of the present disclosure, provided herein is a computer-readable storage medium. The computer-readable storage medium stores at least one program code including instructions that, when executed, cause at least one processor to perform operations for a user equipment (UE). The operations may include receiving, from a plurality of candidate UEs, assistance information including a plurality of zone identifiers related to the plurality of candidate UEs, determining at least one anchor UE among the plurality of candidate UEs based on the plurality of zone identifiers, and performing a positioning procedure with the at least one anchor UE.

The determining of the at least one anchor UE may include determining the at least one anchor UE among the plurality of candidate UEs based on a comparison between the plurality of zone identifiers related to the plurality of candidate UEs and a zone identifier of a target UE.

The determining of the at least one anchor UE may include determining, as the at least one anchor UE, at least one candidate UE having a zone identifier identical to a zone identifier of a target UE among the plurality of candidate UEs.

The determining of the at least one anchor UE may include calculating distances between the plurality of candidate UEs and a target UE based on the plurality of zone identifiers related to the plurality of candidate UEs and a zone identifier of the target UE, and determining, as the at least one anchor UE, at least one candidate UE located at a shortest distance from the target UE among the plurality of candidate UEs.

The assistance information including the zone identifiers comprises time information when corresponding candidate UE determines corresponding zone identifier

The foregoing solutions are merely a part of the examples of the present disclosure and various examples into which the technical features of the present disclosure are incorporated may be derived and understood by persons skilled in the art from the following detailed description.

### Advantageous Effects

According to the present disclosure, wireless signal transmission and reception may be efficiently performed in wireless communication systems.

It will be appreciated by persons skilled in the art that the effects that could be achieved with the present disclosure are not limited to what has been particularly described hereinabove and other advantages of the present disclosure will be more clearly understood from the following detailed description.

### BRIEF DESCRIPTION OF THE DRAWINGS

The accompanying drawings, which are included to provide a further understanding of the present disclosure, illustrate embodiments of the present disclosure and together with the description serve to explain the principle of the present disclosure:
FIG. 1 is a diagram illustrating the structure of a new radio (NR) system;
FIG. 2 is a diagram illustrating functional split between a next generation radio access network (NG-RAN) and a 5th generation core network (5GC);
FIG. 3 illustrates a radio protocol architecture of the NR system;
FIG. 4 illustrates a radio frame structure in NR system;
FIG. 5 illustrates a resource grid of a slot in the NR system;
FIG. 6 illustrates an example of a communication system 1 to which implementations of the present disclosure is applied;
FIG. 7 and FIG. 8 illustrate wireless devices applicable to the present disclosure;
FIG. 9 illustrates a vehicle or an autonomous driving vehicle applied to the present disclosure;
FIG. 10 illustrates a radio protocol architecture for sidelink (SL) communication;
FIG. 11 illustrates a synchronization source or synchronization reference of vehicle-to-everything (V2X);
FIG. 12 illustrates a procedure of performing V2X or SL communication by a user equipment (UE) depending on a transmission mode;
FIG. 13 illustrates three cast types in SL communication;
FIG. 14 illustrates an example of a sensing operation according to an embodiment of the present disclosure;
FIG. 15 illustrates an exemplary 5G system architecture capable of positioning for UEs connected to a next-generation radio access network (NG-RAN) or evolved universal terrestrial radio access network (E-UTRAN);
FIG. 16 illustrates an example of network implementation for measuring the location of a UE;
FIG. 17 illustrates exemplary protocol layers used to support Long-Term Evolution (LTE) positioning protocol (LPP) message transfer between a location management function (LMF) and a UE;
FIG. 18 illustrates exemplary protocol layers used to support NR positioning protocol annex (NRPPa) protocol data unit (PDU) transfer between an LMF and an NG-RAN node;
FIG. 19 is a diagram for explaining an Observed Time Difference of Arrival (OTDOA) positioning method according to an embodiment of the present disclosure.
FIG. 20 is a flowchart illustrating a method of determining an anchor UE for positioning according to an embodiment of the present disclosure.

### BEST MODE

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

As more and more communication devices require greater communication capacity, there is a growing need for enhanced Mobile Broadband Communications (eMBB) improved over the current radio access technology (RAT). In addition, massive Machine Type Communications (MTC) that connects numerous devices and objects to provide various services anytime and anywhere is also considered a key issue in next-generation communications. Additionally, discussions are underway regarding communication system designs in consideration of services and/or UEs sensitive to reliability and latency. The introduction of next-generation RATs such as eMBB, massive MTC, Ultra Reliable and Low Latency Communications (URLLC) is being discussed. In this document, the corresponding technology will be referred to as New Radio or New RAT (NR) for convenience of description.

For the sake of clarity, the present disclosure primarily focuses on 3GPP NR, but the technical ideas of the present disclosure are not limited thereto.

In this specification, the term "set/setting" may be replaced with the term "configure/configuration", and both terms may be used interchangeably. A conditional expression (e.g., "if", "in a case", or "when") may be replaced by "based on that" or "in a state/status." In addition, operations and software/hardware (SW/HW) configurations of a user equipment/base station (UE/BS) may be derived/understood based on satisfaction of related conditions. If a process on a receiving (or transmitting) side is capable of being derived/understood from a process on a transmitting (or receiving) side in signal transmission/reception between wireless communication devices (e.g., BS, UE, etc.), description thereof may be omitted. Signal determination/generation/encoding/transmission at the transmitting side, for example, may be understood as signal monitoring reception/decoding/determination at the receiving side. When it is said that the UE performs (or does not perform) a specific operation, it may be interpreted to mean that the BS expects/assumes (or does not expect/assume) that the UE will perform the specific operation. When it is said that the BS performs (or does not perform) a specific operation, it may be interpreted to mean that the UE expects/assumes (or does not expect/assume) that the BS will perform the specific operation. In the following description, the classification and indexing of sections, embodiments, examples, options, methods, schemes, and so on are merely for convenience of description, but it does not imply that each necessarily constitutes an independent disclosure or should be implemented separately. Furthermore, in describing each section, embodiment, example, option, method, solution, and so on if there is no explicit conflict, it may be inferred or understood that at least some of the sections, embodiments, examples, options, methods, solutions, and so on may be implemented in combination or may be omitted in implementation.

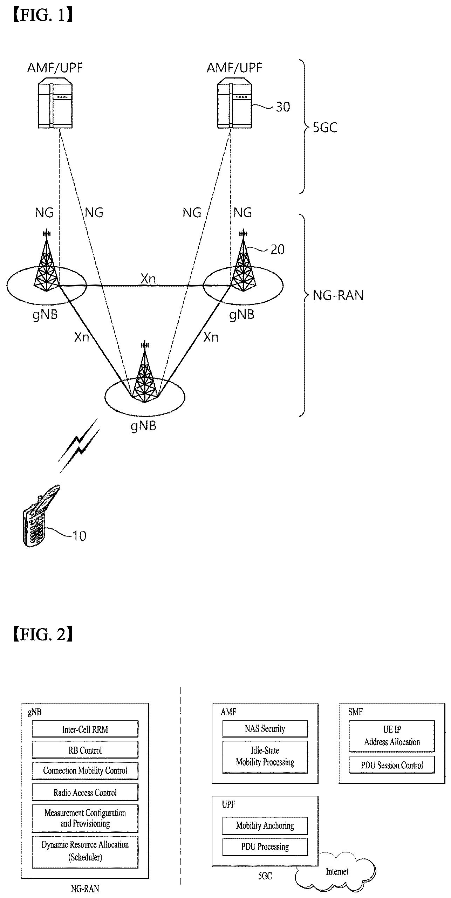

FIG. 1 illustrates the structure of a NR system.

Referring to FIG. 1, a next-generation radio access network (NG-RAN) may include a BS 20 that provides user plane and control plane protocol termination to a UE 10. For example, the BS 20 may include a next-generation Node B (gNB) and/or an evolved Node B (eNB). The UE 10 may have fixed or mobile characteristics. The UE 10 may be referred to by other terms such as a mobile station (MS), user terminal (UT), subscriber station (SS), mobile terminal (MT), or wireless device. For example, the BS 20 may be a fixed station communicating with the UE 10. The BS 10 may be referred to by other terms such as a base transceiver system (BTS), access point, and so on.

FIG. 1 shows an example in which a gNB alone is included. The BSs 20 may be connected to each other via an Xn interface. The BS 20 may be connected to a 5th generation core network (5GC) via an NG interface. Specifically, the BS 20 may be connected to an access and mobility management function (AMF) 30 through an NG-C interface and connected to a user plane function (UPF) 30 through an NG-U interface..

FIG. 2 illustrates functional split between the NG-RAN and the 5GC.

Referring to FIG. 2, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

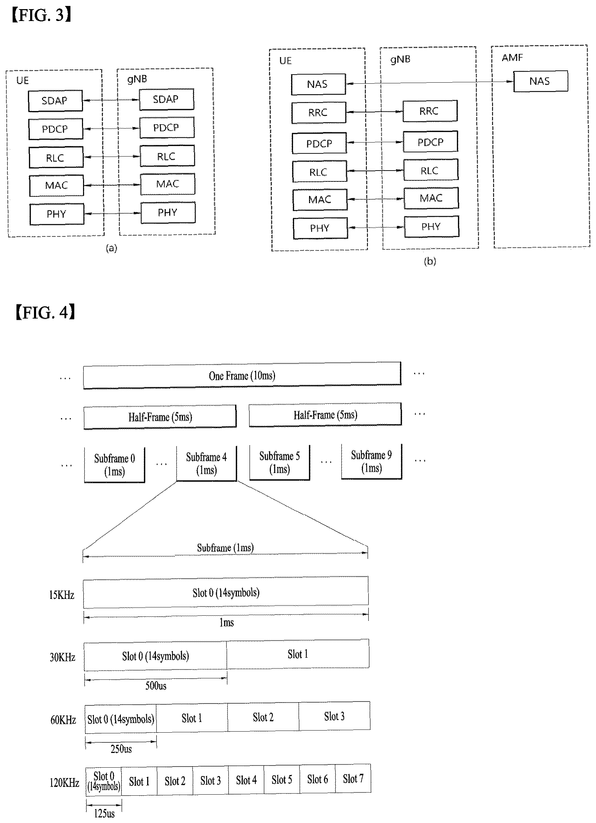

FIG. 3 illustrates a radio protocol architecture of the NR system. Specifically, FIG. 3(a) illustrates a user-plane radio protocol architecture, and FIG. 3(b) illustrates a control-plane radio protocol architecture. A user plane is a protocol stack for user data transmission, and a control plane is a protocol stack for control signal transmission.

Referring to FIG. 3, the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

A service data adaptation protocol (SDAP) layer is only defined in the user plane. The SDAP layer performs functions such as mapping between QoS flows and data radio bearers as well as marking QoS flow identifiers (IDs) within DL and UL packets.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

FIG. 4 illustrates a radio frame structure in NR system.

Referring to FIG. 4, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols.

Table 1 below lists the number of symbols per slot (*N*^{slot}_{symb}), the number of slots per frame (*N*^{frame,u}ₛₗₒₜ), and the number of slots per subframe (*N*^{subframe,u}ₛₗₒₜ) according to an SCS configuration µ in the NCP case.

**[Table 1]**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot (*N*^{slot}_{symb}), the number of slots per frame (*N*^{frame,u}ₛₗₒₜ), and the number of slots per subframe (*N*^{subframe,u}ₛₗₒₜ)according to an SCS in the ECP case.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

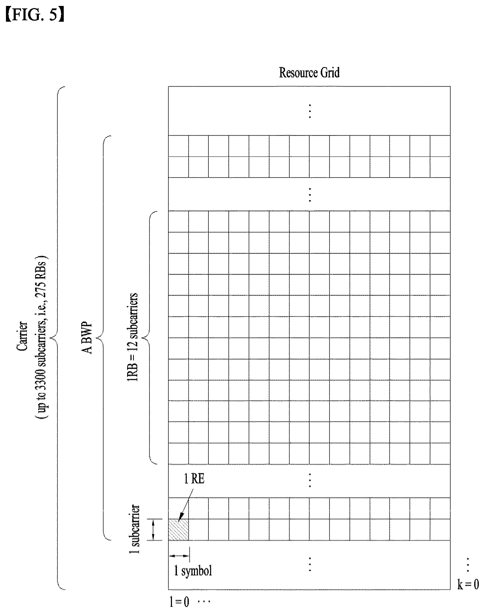

FIG. 5 illustrates a resource grid of a slot in the NR system.

Referring to FIG. 5, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case. A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Only one BWP can be activated for one UE. For each element may be referred to as a resource element (RE) in a resource grid, to which one complex symbol may be mapped.

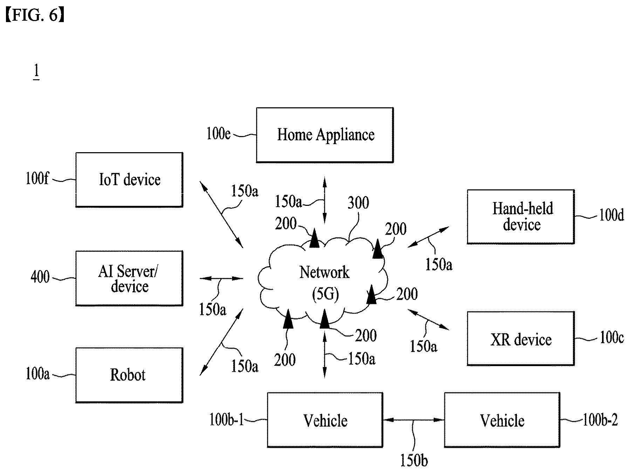

FIG. 6 illustrates an example of a communication system 1 to which implementations of the present disclosure is applied.

Referring to FIG, 6, the communication system 1 includes wireless devices, base stations (BSs), and a network. The wireless devices represent devices performing communication using radio access technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g., relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

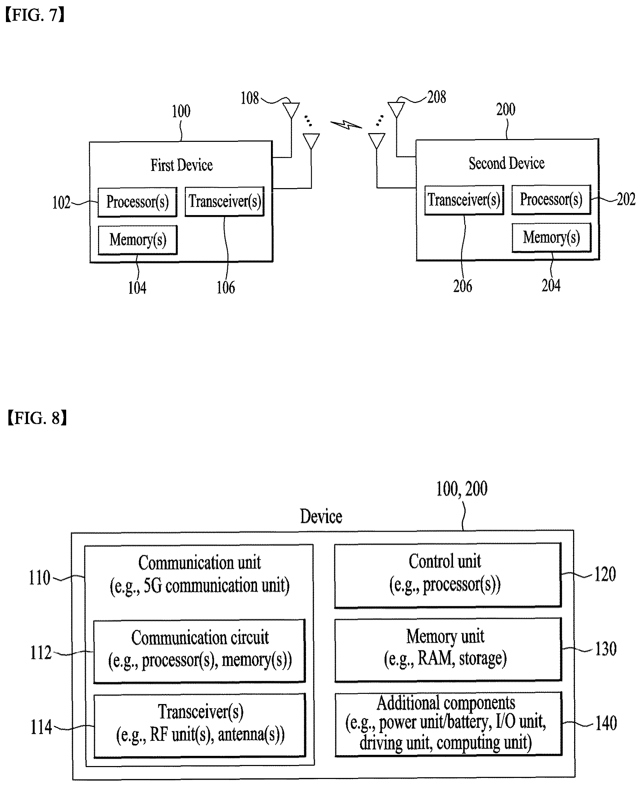

FIG. 7 illustrates wireless devices applicable to the present disclosure.

Referring to FIG. 7, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 8 illustrates another example of a wireless device which can perform implementations of the present disclosure. The wireless device may be implemented in various forms according to a use-case/service (refer to FIG. 6).

Referring to FIG. 8, wireless devices 100 and 200 may correspond to the wireless devices 100 and 200 of FIG. 7 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 of FIG. 7 and/or the one or more memories 104 and 204 of FIG. 7. For example, the transceiver(s) 114 may include the one or more transceivers 106 and 206 of FIG. 2 and/or the one or more antennas 108 and 208 of FIG. 7. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit (e.g., audio I/O port, video I/O port), a driving unit, and a computing unit. The wireless device may be implemented in the form of, without being limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcast terminal, a hologram device, a public safety device, an MTC device, a medicine device, a Fintech device (or a finance device), a security device, a climate/environment device, the AI server/device (400 of FIG. 6), the BSs (200 of FIG. 6), a network node, etc. The wireless device may be used in a mobile or fixed place according to a use-example/service.

In FIG. 8, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read only memory (ROM)), a flash memory, a volatile memory, a non-volatile memory, and/or a combination thereof.

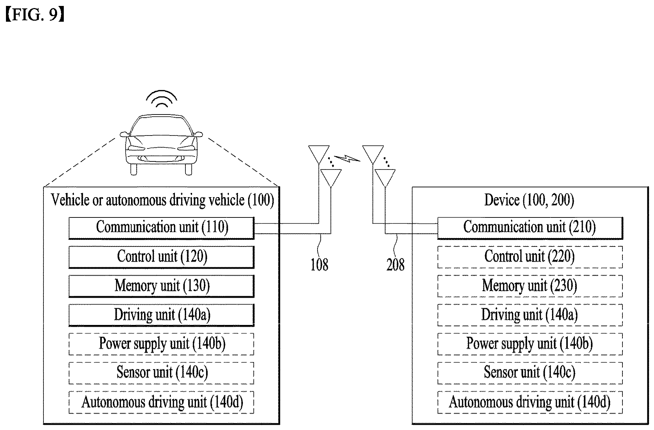

FIG. 9 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. Blocks 110/130/140a~140d correspond to Blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Now, a description will be given of V2X or SL communication.

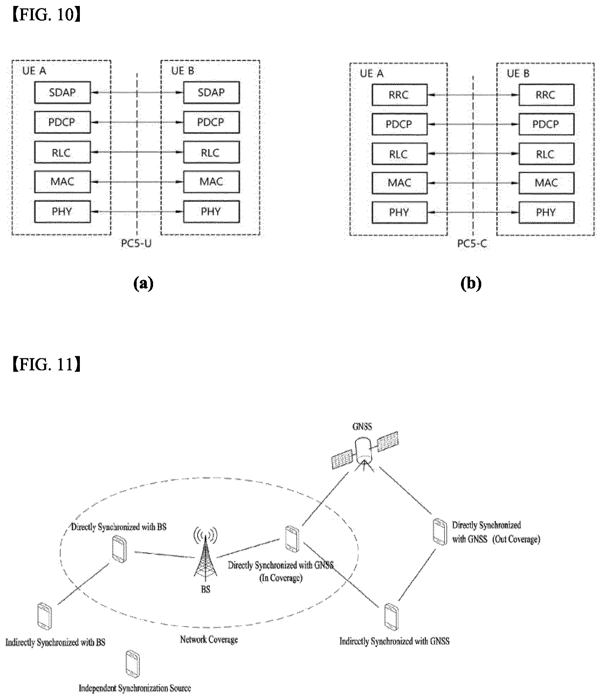

FIG. 10 illustrates a radio protocol architecture for SL communication. Specifically, FIG. 10(a) illustrates a user-plane protocol stack in NR, and FIG. 10(b) illustrates a control-plane protocol stack in NR.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before SL signal transmission and reception. For example, the default information may include information related to an SLSS, a duplex mode (DM), a time division duplex (TDD) UL/DL configuration, information related to a resource pool, an application type related to the SLSS, a subframe offset, broadcast information, or the like. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (in advance). Therefore, the UE does not need to perform hypothesis detection on frequency to discover the S-SSB in the carrier.

Hereinafter, synchronization acquisition of an SL UE will be described.

In TDMA and FDMA systems, accurate time and frequency synchronization are essential. If time and frequency synchronization are not accurate, system performance may be degraded due to inter-symbol interference (ISI) and inter-carrier interference (ICI) between symbols and subcarriers. The same is applied to V2X. In V2X, for time/frequency synchronization, an SLSS may be used at physical layers, while master information block-sidelink-V2X (MIB-SL-V2X) may be used at radio link control (RLC) layers.

FIG. 11 illustrates a synchronization source or synchronization reference of V2X.

Referring to FIG. 11, in V2X, a UE may be directly synchronized with global navigation satellite systems (GNSS). Alternatively, the UE may be indirectly synchronized with the GNSS through another UE (within or out of network coverage). If the GNSS is configured as a synchronization source, a UE may calculate a direct frame number (DFN) and a subframe number using coordinated universal time (UTC) and a (pre)configured DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

Whether to use GNSS-based synchronization or BS-based synchronization may be configured (in advance). In single-carrier operation, the UE may derive the transmission timing of the UE from an available synchronization reference with the highest priority.

For example, the UE may select (or reselect) a synchronization reference and obtain synchronization from the synchronization reference. In addition, the UE may perform SL communication (e.g., PSCCH/PSSCH transmission and reception, physical sidelink feedback channel (PSFCH) transmission and reception, S-SSB transmission and reception, reference signal transmission and reception, etc.) based on the acquired synchronization.

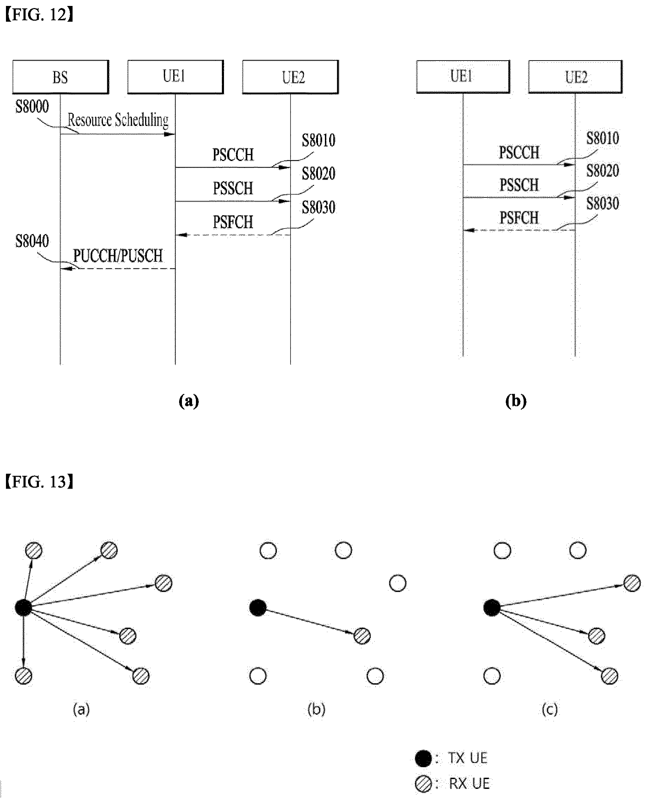

FIG. 12 illustrates a procedure of performing V2X or SL communication by a UE depending on a transmission mode. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 12 (a) illustrates a UE operation related to LTE transmission mode 1 or LTE transmission mode 3. Alternatively, for example, FIG. 11 (a) illustrates a UE operation related to NR resource allocation mode 1. For example, LTE transmission mode 1 may apply to general SL communication, and LTE transmission mode 3 may apply to V2X communication.

For example, FIG. 12 (b) illustrates a UE operation related to LTE transmission mode 2 or LTE transmission mode 4. Alternatively, for example, FIG. 11 (b) illustrates a UE operation related to NR resource allocation mode 2.

Referring to FIG. 12(a), in LTE transmission mode 1, LTE transmission mode 3, or NR resource allocation mode 1, a BS may schedule an SL resource to be used for SL transmission by a UE. For example, in a step S8000, the BS may transmit information related to an SL resource and/or information related to a UE resource to a first UE. For example, the UL resource may include a PUCCH resource and/pr a PUSCH resource. For example, the UL resource may be a resource to report SL HARQ feedback to the BS.

For example, a first UE may receive information related to a Dynamic Grant (DG) resource and/or information related to a Configured Grant (CG) resource from a BS. For example, the CG resource may include a CG type 1 resource or a CG type 2 resource. In the present specification, the DG resource may be a resource that the BS configures/allocates to the first UE over Downlink Control Information (DCI). In the present specification, the CG resource may be a (periodic) resource configured/allocated by the BS to the first UE over a DCI and/or an RRC message. For example, in the case of the CG type 1 resource, the BS may transmit an RRC message including information related to the CG resource to the first UE. For example, in the case of the CG type 2 resource, the BS may transmit an RRC message including information related to the CG resource to the first UE, and the BS may transmit DCI related to activation or release of the CG resource to the first UE.

In a step S8010, the first UE may transmit PSCCH (e.g., Sidelink Control Information (SCI) or 1st-stage SCI) to a second UE based on the resource scheduling. In a step S8020, the first UE may transmit PSSCH (e.g., 2nd-stage SCI, MAC PDU, data, etc.) related to the PSCCH to the second UE. In a step S8030, the first UE may receive PSFCH related to the PSCCH/PSSCH from the second UE. For example, HARQ feedback information (e.g., negative acknowledgement (NACK) information or acknowledgement (ACK) information) may be received from the second UE over the PSFCH. In a step S8040, the first UE may transmit/report HARQ feedback information to the BS over PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1.

Referring to FIG. 12(b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 12 (a) or FIG. 12 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B.

Referring to FIG. 12(a) or FIG. 12(b), in step S8030, a first UE may receive a PSFCH. For example, the first UE and a second UE may determine a PSFCH resource, and the second UE may transmit HARQ feedback to the first UE on the PSFCH resource.

Referring to FIG. 12(a), in step S8040, the first UE may transmit SL HARQ feedback to the BS over a PUCCH and/or PUSCH.

FIG. 13 illustrates three cast types in SL communication.

Specifically, FIG. 13A shows broadcast-type SL communication, FIG. 13B shows unicast-type SL communication, and FIG. 13C shows groupcast-type SL communication. In the case of unicast-type SL communication, the UE may perform one-to-one communication with other UEs. In the case of groupcast-type SL communication, the UE may perform SL communication with one or more UEs within a group to which the UE belongs. In various embodiments of the present disclosure, SL groupcast communication may be replaced with SL multicast communication, SL one-to-many communication, etc.

### < Integrated Sensing and Communication (ISAC)>

Wireless sensing is a technology that may obtain information about the characteristics of an environment and/or an object within the environment by determining the instantaneous linear velocity, angle, distance (range), and so on of the object by using radio frequencies. A radio frequency sensing function may provide services for locating an object without a device because there is no need to connect to the object via a device in a network.

The function of obtaining range, velocity, and angle information from a radio frequency signal may provide a wide range of new functions such as detection of various objects, object recognition (e.g., vehicles, humans, animals, and UAVs), and high-precision localization, tracking, and activity recognition. A wireless sensing service may, for example, provide information to various industries (e.g., UAVs, smart homes, V2X, factories, railroads, public safety, and so on) that enable applications that provide intruder detection, assisted car driving and navigation, trajectory tracking, collision avoidance, traffic management, health and traffic management, and so on. In some cases, for wireless sensing, non-3GPP type sensors (e.g., radar and camera) may be used to further support 3GPP-based sensing. For example, an operation of the wireless sensing service, that is, a sensing operation, may depend on transmission, reflection, and scattering processing of a wireless sensing signal. Therefore, wireless sensing may provide an opportunity to enhance existing communication systems from communication networks to wireless communication and sensing networks.

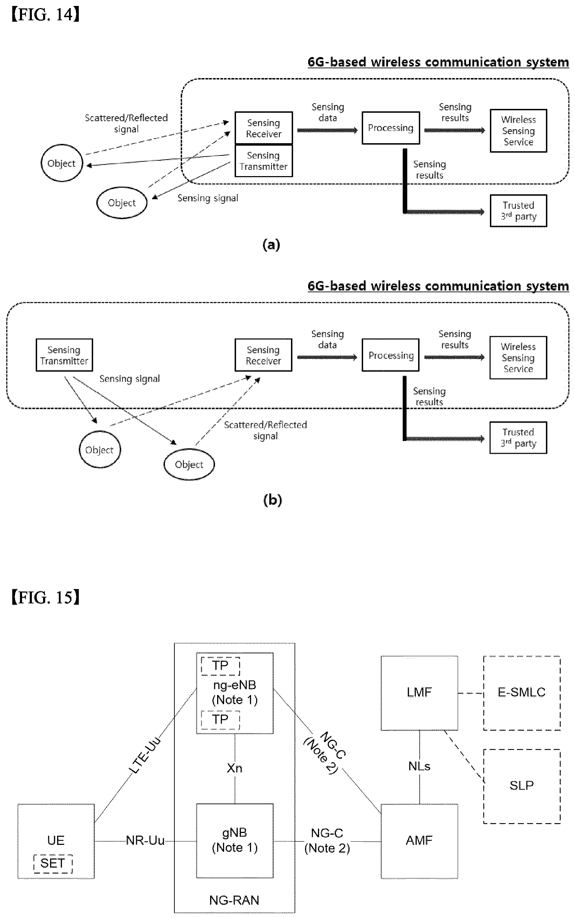

FIG. 14 illustrates an example of a sensing operation according to an embodiment of the present disclosure. The embodiment of FIG. 14 may be combined with various embodiments of the present disclosure. Specifically, FIG. 14(a) illustrates an example of sensing (e.g., mono-static sensing) using a sensing receiver and a sensing transmitter at the same location, and FIG. 14(b) illustrates an example of sensing (e.g., bistatic sensing) using a sensing receiver and a sensing transmitter which are separated.

### <Positioning>

FIG. 15 illustrates an exemplary 5G system architecture capable of positioning for UEs connected to a NG-RAN or E-UTRAN.

Referring to FIG. 15, an AMF may receive a request for location services related to a specific target UE from other entities such as a gateway mobile location center (GMLC). Alternatively, the AMF may autonomously determine to initiate location services on behalf of the specific target UE. Thereafter, the AMF may transmit a location service request to a location management function (LMF). Upon receiving the location service request, the LMF may process the location service request and return processing results including the estimated location of the UE to the AMF. When the LMF receives a location service request from another entity other than the AMF, for example, the GMLC, the AMF may forward the processing results received from the LMF to the other entity.

A new-generation evolved Node B (ng-eNB) and gNB are network elements of the NG-RAN capable of providing measurement results for location estimation. The ng-eNB and gNB may measure radio signals for a target UE and transmit the results to the LMF. Additionally, the ng-eNB may control certain transmission points (TPs) such as remote radio heads, or positioning reference signal dedicated (PRS-dedicated) TPs for E-UTRA that support beacon systems based on a PRS.

The LMF is connected to an enhanced serving mobile location center (E-SMLC) which may enable the LMF to access the E-UTRAN. For example, the E-SMLC may enable the LMF to support Observed Time Difference of Arrival (OTDOA), which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure DL signals through various sources, such as the NG-RAN and E-UTRAN, different global navigation satellite systems (GNSSs), a terrestrial beacon system (TBS), WLAN wireless local access network (WLAN) access points, Bluetooth beacons, and UE barometric pressure sensors. The UE may include an LCS application, or the UE may connect to the LCS application either through communication with a connected network or through other applications integrated into the UE. The LCS application may include measurement and calculation functions necessary for determining the location of the UE. For instance, the UE may include an independent positioning function such as a global positioning system (GPS), and thus the UE may report the location thereof independently of NG-RAN transmission. The independently acquired location information may also be used as supplemental information to positioning information obtained from the network.

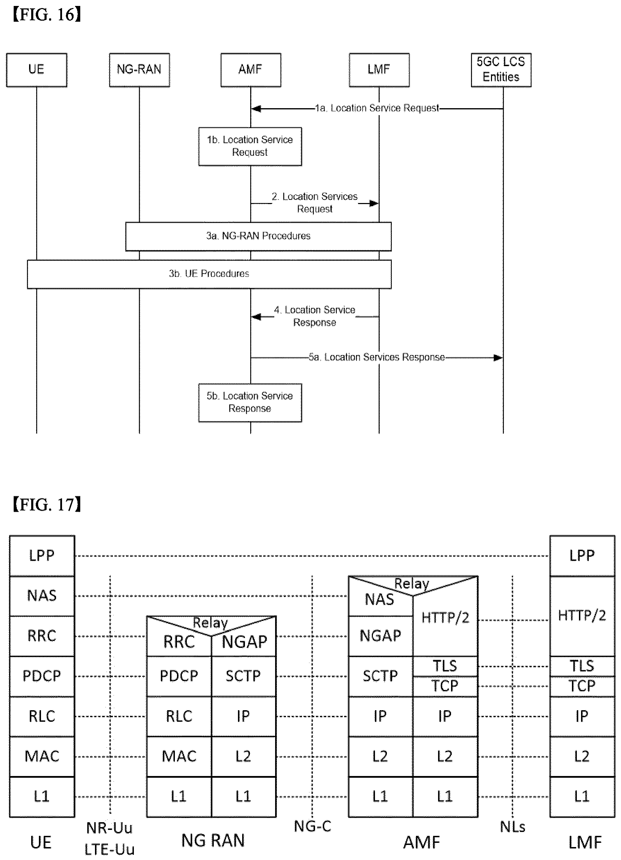

FIG. 16 illustrates an example of network implementation for measuring the location of a UE.

When the UE is in a connection management-idle (CM-IDLE) state, if an AMF receives a location service request, the AMF may establish a signaling connection with the UE and request a network trigger service to assign a specific serving gNB or ng-eNB. The above operation process is not illustrated in FIG. 15. That is, in FIG. 16, it may be assumed that the UE is in the connected mode. However, the signaling connection may be released by a NG-RAN while the positioning process is in progress due to signaling and data inactivity.

Referring to FIG. 16, a network operation process for measuring the location of the UE will be described in detail. In step 1a, a 5GC entity such as a GMLC may send a location service request to a serving AMF to measure the location of a target UE. However, even if the GMLC request no location services, the serving AMF may determine that location services are needed to measure the location of the target UE in step 1b. For example, the serving AMF may autonomously determine to provide location services to measure the location of the UE for an emergency call.

Thereafter, the AMF forwards the location service request to an LMF in step 2. In step 3a, the LMF may initiate location procedures with a serving ng-eNB and serving gNB to obtain positioning data or positioning assistance data. Additionally, in step 3b, the LMF may initiate location procedures for DL positioning with the UE. For example, the LMF may transmit location assistance data (e.g., assistance data defined in 3GPP TS 36.355) to the UE or obtain a location estimate or location measurement. Step 3b may be performed additionally after step 3a, or step 3b may be performed instead of step 3a.

In step 4, the LMF may provide a location service response to the AMF. The location service response may include information on whether the location of the UE is successfully estimated and the estimated location of the UE. Thereafter, if the procedures of FIG. 16 are initiated by step 1a, the AMF may forward the location services response to the 5GC entity such as the GMLC. If the procedures of FIG. 16 are initiated by step 1b, the AMF may use the location service response to provide location services related to emergency calls, etc.

FIG. 17 illustrates exemplary protocol layers used to support LTE positioning protocol (LPP) message transfer between an LMF and a UE.

An LPP PDU may be transmitted in a NAS PDU between an AMF and a UE. Referring to FIG. 16, the LPP may be terminated between a target device (e.g., a UE in the control plane or an SUPL enabled terminal (SET) in the user plane) and a location server (e.g., an LMF in the control plane or an SUPL location platform (SLP) in the user plane). LPP messages may be delivered in a transparent PDU format through intermediate network interfaces using appropriate protocols such as a next-generation application protocol (NGAP) over the next-generation control plane (NG-C) interface, NAS/RRC over the LTE-Uu and NR-Uu interfaces. The LPP enables positioning for both NR and LTE by employing various positioning methods.

For example, a target device and a location server may exchange, through LPP, capability information therebetween, assistance data for positioning, and/or location information. The target device and the location server may exchange error information and/or indicate abort of an LPP procedure, through an LPP message.

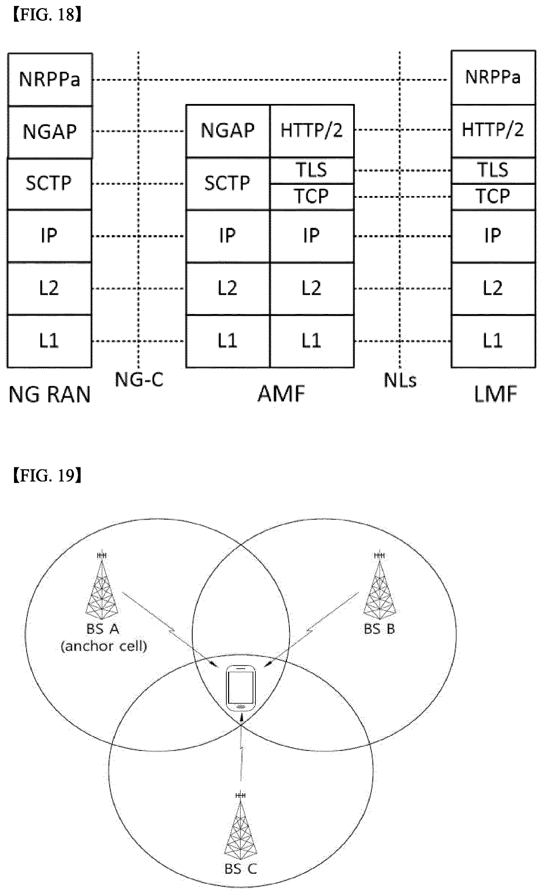

FIG. 18 illustrates exemplary protocol layers used to support NR positioning protocol annex (NRPPa) PDU transfer between an LMF and an NG-RAN node.

NRPPa may be used for information exchange between an NG-RAN node and an LMF. Specifically, NRPPa may exchange an enhanced cell ID (E-CID) for measurements transmitted from an ng-eNB to an LMF, data to support OTDOA positioning methods, and a cell ID and cell location ID for NR Cell ID positioning methods. Even if there is no information about related NRPPa transactions, an AMF may route NRPPa PDUs based on the routing ID of an involved LMF over an NG-C interface.

NRPPa procedures for location and data collection may be categorized into two types. The first type is a UE-associated procedure, which involves transmission of information (e.g., location measurement data) on a specific UE. The second type is a non-UE associated procedure, which involves transmission of information applicable to NG-RAN nodes and related TPs (e.g., gNB/ng-eNB/TP timing information). These two types of procedures may be supported independently or simultaneously.

### <Positioning Methods>

The NG-RAN may support the following positioning methods: GNSS, OTDOA, E-CID, barometric sensor positioning, WLAN positioning, Bluetooth positioning, TBS, Uplink Time Difference of Arrival (UTDOA), and so on. Although any one of the positioning methods may be used for UE positioning, two or more positioning methods may be used for UE positioning.

### (1) Observed Time Difference of Arrival (OTDOA)

FIG. 19 is a diagram for explaining an OTDOA positioning method according to an embodiment of the present disclosure.

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

### (2) E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

### (3) Uplink Time Difference of Arrival (UTDOA)

UTDOA is a method of determining the location of the UE by estimating the arrival time of a sounding reference signal (SRS). When calculating the estimated SRS arrival time, the serving cell may be used as a reference cell to estimate the location of the UE based on the difference in time of arrival with respect to another cell (or BS/TP). To implement UTDOA, an E-SMLC may indicate the serving cell of a target UE and then instruct the target UE to perform SRS transmission. Additionally, the E-SMLC may provide the following configurations: periodic/non-periodic SRS, bandwidth, and frequency/group/sequence hopping.

### <SL Positioning>

NR positioning discussed in 3GPP NR Release 17 supports only network-based Uu positioning and does not support positioning using SL communication. However, SL positioning is planned to be supported in 3GPP NR Release 18.

Uu positioning is a conventional method for location estimation under a connection between a target UE and a BS (gNB/LMF), but SL positioning is a new method for location estimation based on a connection between a target UE and one or more anchor UEs

Sidelink positioning is a new method for positioning performed by exchanging sidelink positioning reference signals (SL-PRS) with anchor UEs around a target UE, rather than with a base station (gNB), by a direction connection using sidelink communication technology. Accordingly, the sidelink positioning operation at the physical layer is performed through SL-PRS transmission and measurement between the target UE and the anchor UEs.

Conventionally, Uu positioning uses the LPP as a protocol. An LPP session is a point-to-point communication protocol between the target UE and the LMF. Thus, the LMF provides the target UE with positioning-related information using the LPP protocol. Additionally, the LMF performs positioning by configuring a gNB and exchanging positioning-related messages using the NRPPa protocol.

In contrast, in sidelink positioning, the positioning operation is performed by exchanging positioning protocol messages between the target UE and nearby anchor UEs, instead of the LMF. Therefore, the sidelink positioning at the protocol layer is performed between UEs using the sidelink positioning protocol (SLPP).

The SLPP procedure is based on a positioning protocol session (i.e., SLPP session) established between the target UE and anchor UE(s). The SLPP procedure (/transaction) basically includes the following five operations:
- SL Positioning Capability Transfer
- SL Positioning Assistance Data exchange
- SL Location Information Transfer
- Error handling
- Abort

Additionally, in 3GPP, a positioning session-less positioning operation is also considered when message exchange is not required between UEs.

To determine anchor UEs in SL positioning, the following processes are currently being discussed.
1) Through a discovery search process, a target UE exchanges UE capability information with surrounding UEs capable of SL communication (hereinafter referred to as candidate UEs) through SL communication. In this case, basic information such as whether the discovered UEs support SL positioning is exchanged. The anchor UE is determined only when the corresponding UEs support SL positioning.
2) After exchanging the basic information, the target UE and candidate UEs determine the final anchor UE through negotiation. When performing the negotiation for SL positioning, the anchor UE may be determined only when a request to serve as the anchor UE is not rejected during the negotiation process.
3) Additionally, the anchor UE provides information to the target UE regarding whether the anchor UE is capable of ascertaining the location thereof. The anchor UE may perform absolute positioning only when the anchor UE already knows the location thereof or when the anchor UE is capable of measuring the location thereof based on Uu positioning.

### <First Embodiment>

When a UE cannot measure a sufficient number of gNBs for Uu positioning, the UE may use network-assisted sidelink positioning.

For network-assisted sidelink positioning, the target UE transmits the identifiers (UE identities) of located UE candidates to the LMF, and the LMF provides a candidate list of located UEs, allowing sidelink positioning to be performed using the locatedUEs. However, discussion is ongoing regarding which identifier to use when the target UE delivers information about the located UEs to the LMF.

Conventionally, in sidelink communication, the MAC layer uses a Source Layer-2 ID and a Destination Layer-2 ID at the MAC layer for communication between UEs. For example, the MAC layer uses a pair of a Source Layer-2 ID and a Destination Layer-2 ID for the multiplexing operation. Also, for the sidelink HARQ operation, it uses 8 bits for the Source Layer-2 ID and 16 bits for the Destination Layer-2 ID. Further, for MAC CE transmission, such as CSI reporting, it uses a pair of a Source Layer-2 ID and a Destination Layer-2 ID corresponding to the PC5-RRC connection. Further, for sidelink groupcast/sidelink broadcast services, the UE delivers the Destination Layer-2 ID and QoS information related to the sidelink DRX-applied service to the network via an RRC sidelink UE information message.

For reference, the Source Layer-2 ID is 24 bits and divided into two parts: the lower 8 bits are delivered to the physical layer of the transmitter, and the upper 16 bits are included in the MAC header.

As described above, for network-assisted sidelink positioning, the target UE should deliver the identifier of the located UE to the LMF.

Conventionally, when using the method of delivering the Destination Layer-2 ID to the network via an RRC message, the message is only delivered to the gNB and not to the LMF. Specifically, in sidelink communication, it is difficult to exchange unique UE identifiers (e.g., IMEI, MDN) between UEs due to security concerns. Therefore, sidelink communication is performed using the Source Layer-2 ID and Destination Layer-2 ID that may distinguish UEs at the MAC layer.

Conventionally, when only the Destination Layer-2 ID is delivered, the LMF has no way to identify which anchor UE corresponds to the ID. That is, the LMF has not method to match the Destination Layer-2 ID with the UE.

Therefore, a new UE identifier method is needed for the LMF to support network-assisted sidelink positioning.

In the first embodiment of the present disclosure, a UE identifier for network-assisted sidelink positioning is proposed. Specifically, the embodiment proposes a UE identifier that may be recognized both in communication between the UEs supporting sidelink positioning and the LMF, and in sidelink communication between the UEs supporting sidelink positioning and other UEs.

A UE identifier that may be commonly recognized by the LMF and the UEs may be used. Thus, the target UE may send the identifier of a UE to the LMF, and the LMF may recognize the information about the UE based on the UE identifier. Based on the recognized information, the LMF may designate a located UE and signal the same to the target UE.

The proposed method and procedure of the first embodiment of the present disclosure are described below.

Step 1) The UE transmits the UE identifier thereof and information for sidelink positioning to the LMF. Here, the UE refers to a UE that supports sidelink positioning.

The UE identifier includes at least one of a Layer-2 ID used/to be used for sidelink communication or an Application ID used/to be used for sidelink communication.

The information for sidelink positioning includes at least one of the following details:
- SL-PRS transmission and/or measurement capability
- Frequency range (FR) information (e.g., FR1, FR2, NR-U)
- UE role (e.g., anchor UE, server UE)
- Sidelink positioning method (e.g., SL-TDoA, SL-AoS, RTT-type)
- Location information
- Accuracy and/or integrity of the location information
- Synchronization reference
- UE type (e.g., RSU, normal UE)
- Speed/velocity and direction information
- Zone ID information

To transmit the UE identifier of the UE and sidelink positioning information to the LMF, the UE inserts the identifier in an LPP or SLPP message and transmits the message to the LMF.

Step 2) The network-assisted sidelink positioning operation is initiated.

The initiation of the network-assisted sidelink positioning operation may be triggered by either the target UE or the LMF, and the target UE informs the LMF of the UE identifiers of located UE candidates.

Here, the target UE discovers located UE candidates through a discovery process, and the target UE and the located UE candidates exchange their UE identifiers with each other. Through the exchange, the target UE may recognize the identifiers of the located UE candidates.

The target UE then informs the LMF of the UE identifiers of the located UE candidates. The UE identifiers include at least one of the Layer-2 ID used/to be used for sidelink communication and the Application ID used/to be used for sidelink communication.

Step 3) The LMF selects a located UE and informs the target UE of the corresponding UE identifier. That is, the LMF selects a located UE. Then, based on the received UE identifiers of the located UE candidates, the status and capability of each located UE candidate are determined. Based on the determined information, the LMF selects the optimal located UE for sidelink positioning of the target UE.

The LMF delivers the UE identifier of the selected located UE(s) to the target UE. The UE identifier includes at least one of a Layer-2 ID used/to be used for sidelink communication or an Application ID used/to be used for sidelink communication.

In steps 1 to 3 described above, the same type of UE identifier is used throughout. That is, either the Layer-2 ID or the Application ID is selected and used consistently.

As the Layer-2 ID, the Source Layer-2 ID used in sidelink communication may be used. The Application ID may refer to an ID generated and managed at a higher application layer that performs the positioning operation.

In addition, to prevent errors in UE identification between the LMF and the target UE, the UE identifier used in Steps 1 to 3 is configured to use the same number of bits. In other words, one of 8 bits, 16 bits, or 24 bits is selected, and the selected bit length is consistently used in each step.

When the Source Layer-2 ID is used as the UE identifier, conventionally dividing the ID into the lower or upper parts to be used at the MAC layer is ignored, and all 24 bits are used as the UE identifier.

By using the procedure proposed in the first embodiment of the present disclosure, the LMF becomes aware of the identifier information of UEs that support sidelink, and may use the UE identifiers in selecting anchor UEs or located UEs for the target UE as needed.

In the procedure proposed in the present disclosure, the UE may deliver the information to the LMF using an LPP (or SLPP) message. However, the information may also be delivered to the gNB through RRC and/or MAC signaling, and then forwarded to the LMF using an NRPPa message.

Although the first embodiment of the present disclosure is intended to support network-assisted sidelink positioning, the UE identifier may also be used for distinguishing and recognizing each UE in sidelink positioning involving the LMF.

### <Second Embodiment>

Various types of anchor UEs may be used in sidelink positioning, and they may be selected in a variety of scenarios. However, the method and procedure for determining an anchor UE have not yet been defined. In sidelink positioning, the anchor UE used is an important factor in determining success and quality of positioning. Therefore, an appropriate method for determining an anchor UE is needed.

In the second embodiment of the present disclosure, a method of selecting an anchor UE using a Zone ID is proposed.

The conditions and methods for determining the anchor UE may be very diverse. The distance between the target UE and the anchor UE may also be considered an important condition. Since sidelink positioning is measured based on SL-PRS transmission and reception between the target UE and the anchor UE, an anchor UE located at a shorter distance may be advantageous in terms of signal quality compared to one at a longer distance. Therefore, in the second embodiment of the present disclosure, a method is considered that prioritizes selecting an anchor UE located closer to the target UE.

According to the second embodiment of the present disclosure, by using a nearby UE as an anchor UE even when the target UE is moving, the probability that the anchor UE moves out of the sidelink coverage during positioning may be minimized, and thus more stable sidelink positioning may be ensured.

In the case where the anchor UE sends information about the location thereof when it is selected, a significant amount of computation is required to calculate the distance to the target UE. However, by using the Zone ID to roughly calculate the distance, an anchor UE at a close distance may be efficiently found.

In the second embodiment of the present disclosure, anchor UE candidates and the target UE each transmit their own Zone ID to an anchor UE determination entity. Here, the anchor UE determination entity may include at least one of the target UE, a server UE (an SL positioning server UE), and the LMF, and two or more entities may cooperate and collaborate to determine the anchor UE.

The calculation of the Zone ID is performed as specified in 3GPP TS 38.331 and 3GPP TS 38.321. Specifically, when sl-ZoneConfig is configured, the UE may calculate its own Zone ID based on the location information about the UE according to the relevant sections of 3GPP TS 38.331 excerpted in Table 3 below.

**[Table 3]**

| | **5.8.11 Zone identity calculation** |
|---|---|
| The UE shall determine an identity of the zone (i.e. Zone_id) in which it is located using the following formulae, if *sl-ZoneConfig* is configured: | |
| | *x*₁*=* Floor (*x* / *L*) Mod 64; |
| | *y*₁= Floor (*y* / *L*) Mod 64; |
| | Zone_id = *y*₁ * 64 + *x*₁*.* |
| The parameters in the formulae are defined as follows: | |
| | **L** is the value of *sl-ZoneLength* included in *sl-ZoneConfig;* |
| | **x** is the geodesic distance in longitude between UE's current location and geographical coordinates (0, 0) according to WGS84 model [58] and it is expressed in meters; |
| | **y** is the geodesic distance in latitude between UE's current location and geographical coordinates (0, 0) according to WGS84 model [58] and it is expressed in meters. |
| | NOTE: How the calculated zone_id is used is specified in TS 38.321 [3]. |

The calculated Zone ID information is delivered through sidelink communication SCI or an SLPP message if the anchor UE determination entity is the target UE or the server UE. In particular, the SLPP message corresponds to the UE capability exchange/transfer process. However, if the anchor UE determination entity is the LMF, the information is delivered via an LPP message. The method of delivering the Zone ID may depend on the anchor UE determination entity. When the anchor UE determination entity includes at least one of the target UE, the server UE (SL Positioning Server UE), and the LMF, the Zone ID may be delivered by all of the above-described methods.

The anchor UE determination entity determines the anchor UE based on the received Zone ID. Specifically, i) the anchor UE determination entity may select an anchor UE having the same Zone ID as the target UE. Alternatively, ii) the anchor UE determination entity may calculate the distance between the target UE and the anchor UE based on the Zone IDs thereof to select the anchor UE that is at a closer distance. Options i) and ii) may be applied in combination.

If the anchor UE does not know its own location, it may be difficult to calculate the Zone ID. In this case, the anchor UE may obtain information about the location or Zone ID thereof from the LMF or a previous location-calculated UE. If the anchor UE does not know its current location and cannot obtain location information about the UE, it may provide previously stored Zone ID information if available.

Considering the case when the UE is moving, time information corresponding to the time when the Zone ID is calculated may also be delivered together with the Zone ID.

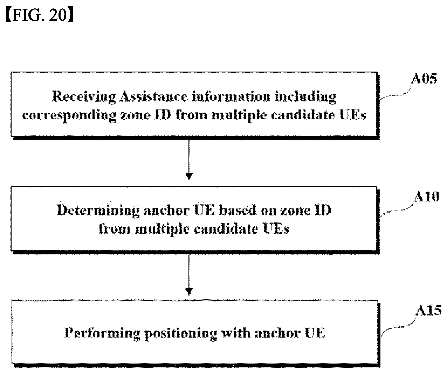

FIG. 20 is a flowchart illustrating a method of determining an anchor UE for positioning according to an embodiment of the present disclosure. In particular, the method in FIG. 20 is assumed to be performed by a location calculating UE, which may include the target UE.

Referring to FIG. 20, in operation A05, the location calculating UE may receive, from multiple candidate UEs, assistance information including multiple zone identifiers related to the multiple candidate UEs. Here, the multiple candidate UEs may be determined through a discovery process.

The assistance information including the zone identifiers comprises time information when corresponding candidate UE determines corresponding zone identifier.

Next, in operation A10, the location calculating UE determines at least one anchor UE among the multiple candidate UEs based on the multiple zone identifiers related to the candidate UEs. Specifically, it compares the multiple zone identifiers related to the multiple candidate UEs with a zone identifier of a target UE to determine the at least one anchor UE among the multiple candidate UEs.

For example, at least one candidate UE having a zone identifier identical to the zone identifier of the target UE among the multiple candidate UEs may be determined as the at least anchor UE.

Alternatively, based on the multiple zone identifiers of the candidate UEs and the zone identifier of the target UE, distances between the candidate UEs and the target UE are calculated, and at least one candidate UE at a shortest distance from the target UE is determined as the at least one anchor UE.

Finally, in operation A15, the location calculating UE performs the positioning procedure with the at least one anchor UE and the target UE.

### <Third Embodiment>

Since sidelink positioning uses UEs (e.g., anchor UEs) instead of BSs, there are UEs of various types with various conditions. Various UEs may be selected and applied in various scenarios. Therefore, which anchor UE is used in sidelink positioning is a critical factor for success and quality of positioning.

Two elements are required to determine an appropriate anchor UE.

The first element is information (such as parameters or capability) about the anchor UE. Based on the information about the anchor UE, it may be determined whether the UE is suitable for sidelink positioning.

The first element is the anchor UE determination procedure (or message). A procedure for determining when and how to identify the information about the anchor UE is necessary.

Regarding the anchor UE determination procedure, it may be considered that a UE finds nearby UEs capable of sidelink communication through the discovery search procedure used in conventional sidelink communication, and exchanges information with the found UEs or that it exchanges information with the found UEs using an MAC-CE used at the MAC layer and sidelink control information (SCI) used at the physical layer in conventional sidelink communication. Alternatively, the anchor UE determination procedure may be performed based on a configuration in which the UE exchanges information with the found UEs through the LPP capability transfer procedure.

As described above, various information and procedures may be used to determine an anchor UE. However, unlike the BS, UEs may move and have limited available power. Therefore, UE information may change over time, and these changing pieces of information must be exchanged during the positioning operation.

If such a wide variety of information is exchanged through various procedures, signaling overhead will increase. Therefore, an effective and efficient procedure for determining an anchor UE is necessary.

The third embodiment of the present disclosure proposes an anchor UE determination procedure for sidelink positioning.

The procedure proposed in the present disclosure is divided into step 1 and step 2. In the following description, the node to which information is delivered represents an entity that determines the anchor UE, and the anchor UE determination entity may be the target UE or server UE.

### Step 1

Anchor UE candidates are determined through the discovery procedure.

The anchor UE candidate determination performed during the discovery procedure depends on the unique capability of the UE. Here, the unique capabilities of the UEs are values that do not change over time or change infrequently.
- Ability of SL-PRS transmission/measurement
- Supported frequency range (e.g., FR1, FR2, NR-U, etc.)
- Supported roles of UE (e.g., anchor UE, server UE, etc.)
- Type of UE (e.g. normal UE, RSU, VRU, etc.)
- PLMN and/or LMF

The anchor UE candidate determination during the discovery procedure depends on whether sidelink communication is possible. That is, whether the anchor UE is capable of sidelink communication is determined. For example, UEs having RSRP greater than or equal to a specific threshold are selected. The threshold may be predetermined or set by the network.

Also, the anchor UE determination performed during the discovery procedure may follow a determination by the LMF. That is, the entity (e.g., the target UE, the server UE) that determines the anchor UE may access the LMF and receive information about the anchor UE. In this case, the entity that determines the anchor UE finds the anchor UE and performs the sidelink positioning operation.

The anchor UE determination performed during the discovery procedure following the determination by the LMF may be used in hybrid positioning (i.e., Uu+PC5 positioning) or network-assisted sidelink positioning.

### Step 2

After the discovery, anchor UE candidates are determined, and the procedure may be classified into an SLPP session-based procedure and an SLPP sessionless procedure.

(1) When the SLPP session-based procedure is used, UE information is provided through communication between UEs, and the provided UE information includes a UE ID. Here, the UE ID means the Layer-2 ID.

The UE information may be provided using the SLPP protocol/message. The SLPP protocol/message is delivered through the SL positioning capability transfer procedure.

Alternatively, the UE information may be delivered and updated during the sidelink positioning operation (i.e., the SL Positioning Assistance Data exchange and SL Location Information Transfer procedure after the SL positioning capability transfer/exchange procedure). The UE information is provided through an SL positioning capability transfer procedure with a new transaction ID. This procedure is performed as a separate transaction during the SL Positioning Assistance Data exchange and SL Location Information Transfer procedure.

(2) When the SLPP sessionless procedure is used, the UE information is provided by the LMF/BS/anchor UE. The provided UE information includes a UE ID. Here, the UE ID means the Layer-2 ID.

The delivery of the UE information is initiated through the LMF and/or the BS. Specifically, the LMF delivers information about an anchor UE to be used to the target/server UE. To this end, the LMF needs to exchange information with anchor UEs in advance. This operation is performed using the LPP protocol. The BS delivers anchor UE information over a broadcast message, i.e., posSIB.

The UE information may be delivered and updated during the sidelink positioning operation (i.e., SL-PRS transmission/reception measurement). In this case, the UE information may be received from the LMF through an LPP protocol/message, or from an anchor UE through an RRC message or MAC CE message. Alternatively, the UE information may be received from the anchor UE through additional information included in the SCI.

The third embodiment of the present disclosure proposes a method and procedure for determining an appropriate anchor UE for sidelink positioning. The target/server UE may determine the optimal anchor UE based on the proposed method and procedure.

The anchor UE determination method using the SLPP session is performed based on the SLPP procedure and SLPP message. The SLPP procedure is the SL positioning capability transfer procedure, and information that changes during the sidelink positioning operation is transferred through an SL positioning capability transfer procedure for a new transaction. The anchor UE determination method without the SLPP session is performed using the LPP message from the the LMF. Additionally, the anchor UE determination using the SLPP session may also be performed using the posSIB broadcast from the BS.

Information that changes during the sidelink positioning operation may be received from the LMF and/or the BS, and additionally, may be quickly updated between the target/server UE and the anchor UE. In this case, updates may be performed using an RRC message, MAC CE, and/or SCI (due to the lack of the session).

The embodiments of the present disclosure may be applied in implementing the above-described wireless sensing and radio frequency sensing functions.

Also, while the term sidelink positioning is used for simplicity in the present disclosure, the configuration of the present disclosure may be applied to positioning based on a communication method in which a direct link is established between UEs without the assistance of the BS to exchange voice or data directly.

The above-described embodiments are combinations of the components and features of the present disclosure in specific forms. Each component or feature should be considered optional unless explicitly mentioned otherwise. Each component or feature may be implemented without being combined with other elements or features. Furthermore, some components and/or features may be combined to implement embodiments of the present disclosure. The order of operations described in the embodiments of the present disclosure may be rearranged. Some components or features of one embodiment may be included in another embodiment, or the components or features may be replaced with related components or features of the other embodiment. It is obvious that claims that are not explicitly cited in the appended claims may be combined to form an embodiment or included as a new claim by amendment after filing.

It is evident to those skilled in the art that the present disclosure could be realized in various specific forms within the scope of the features of the present disclosure. Therefore, the detailed description above should not be interpreted restrictively in all respects but should be considered as illustrative. The scope of the present disclosure should be determined by a reasonable interpretation of the appended claims, and all changes within the equivalent scope of the present disclosure are encompassed within the scope of the present disclosure.

### INDUSTRIAL APPLICABILITY

The present disclosure may be used in a terminal, base station, or other equipment of a wireless mobile communication system.

## Claims

1. A method performed by a user equipment (UE) in a wireless communication system, the method comprising:
receiving, from a plurality of candidate UEs, assistance information including a plurality of zone identifiers related to the plurality of candidate UEs;
determining at least one anchor UE among the plurality of candidate UEs based on the plurality of zone identifiers related to the plurality of candidate UEs; and
performing a positioning procedure with the at least one anchor UE.

2. The method of claim 1, wherein determining the at least one anchor UE comprises:
determining the at least one anchor UE among the plurality of candidate UEs based on a comparison between the plurality of zone identifiers related to the plurality of candidate UEs and a zone identifier of a target UE.

3. The method of claim 1, wherein determining the at least one anchor UE comprises:
determining, as the at least one anchor UE, at least one candidate UE having a zone identifier identical to a zone identifier of a target UE among the plurality of candidate UEs.

4. The method of claim 1, wherein determining the at least one anchor UE comprises:
calculating distances between the plurality of candidate UEs and a target UE based on the plurality of zone identifiers related to the plurality of candidate UEs and a zone identifier of the target UE; and
determining, as the at least one anchor UE, at least one candidate UE located at a shortest distance from the target UE among the plurality of candidate UEs.

5. The method of claim 1, wherein the assistance information including the zone identifiers comprises time information when corresponding candidate UE determines corresponding zone identifier.

6. A user equipment (UE) in a wireless communication system, comprising:
at least one transceiver;
at least one processor; and
at least one computer memory operably connectable to the at least one processor and storing instructions that, when executed, cause the at least one processor to perform operations, the operations comprising:
receiving, from a plurality of candidate UEs, assistance information including a plurality of zone identifiers related to the plurality of candidate UEs;
determining at least one anchor UE among the plurality of candidate UEs based on the plurality of zone identifiers; and
performing a positioning procedure with the at least one anchor UE.

7. The UE of claim 6, wherein determining the at least one anchor UE comprises:
determining the at least one anchor UE among the plurality of candidate UEs based on a comparison between the plurality of zone identifiers related to the plurality of candidate UEs and a zone identifier of a target UE, and the comparison.

8. The UE of claim 6, wherein determining the at least one anchor UE comprises:
determining, as the at least one anchor UE, at least one candidate UE having a zone identifier identical to a zone identifier of a target UE among the plurality of candidate UEs.

9. The UE of claim 6, wherein determining the at least one anchor UE comprises:
calculating distances between the plurality of candidate UEs and a target UE based on the plurality of zone identifiers related to the plurality of candidate UEs and a zone identifier of the target UE; and
determining, as the at least one anchor UE, at least one candidate UE located at a shortest distance from the target UE among the plurality of candidate UEs.

10. The UE of claim 6, wherein the assistance information including the zone identifiers comprises time information when corresponding candidate UE determines corresponding zone identifier.

11. A processing device in a wireless communication system, comprising:
at least one processor; and
at least one computer memory operably connectable to the at least one processor and storing instructions that, when executed, cause the at least one processor to perform operations for a user equipment (UE), the operations comprising:
receiving, from a plurality of candidate UEs, assistance information including a plurality of zone identifiers related to the plurality of candidate UEs;
determining at least one anchor UE among the plurality of candidate UEs based on the plurality of zone identifiers; and
performing a positioning procedure with the at least one anchor UE.

12. A computer-readable storage medium storing at least one program code comprising instructions that, when executed, cause at least one processor to perform operations for a user equipment (UE), the operations comprising:
receiving, from a plurality of candidate UEs, assistance information including a plurality of zone identifiers related to the plurality of candidate UEs;
determining at least one anchor UE among the plurality of candidate UEs based on the plurality of zone identifiers; and
performing a positioning procedure with the at least one anchor UE.
